# EUROPÄISCHE PATENTSCHRIFT

(11) **EP 2 371 022 B1**
(45) Veröffentlichungstag und Bekanntmachung des Hinweises auf die Patenterteilung: **14.09.2016**
(21) Anmeldenummer: 09768064.9
(22) Anmeldetag: 09.12.2009
(51) Int. Cl.: H01M 8/0438, H01M 8/04664, G01M 3/22

(54) **VERFAHREN ZUR DICHTHEITSPRÜFUNG EINES STACKS VON BRENNSTOFFZELLEN**
METHOD FOR CHECKING THE SEAL OF A STACK OF FUEL CELLS
PROCÉDÉ DE CONTRÔLE DE L'ÉTANCHÉITÉ D'UNE PILE DE CELLULES À COMBUSTIBLE

(30) Priorität: 11.12.2008 DE 102008061807
(43) Veröffentlichungstag der Anmeldung: 05.10.2011
(73) Patentinhaber: Inficon GmbH, 50968 Köln (DE)
(72) Erfinder: SEITZ, Sandra, 40225 Düsseldorf (DE); WIDT, Rudi, 50969 Köln (DE)
(74) Vertreter: dompatent von Kreisler Selting Werner - Partnerschaft von Patent- und Rechtsanwälten mbB
(86) Internationale Anmeldenummer: PCT/EP2009/066753
(87) Internationale Veröffentlichungsnummer: WO 2010/066802

(56) Entgegenhaltungen:
- WO-A1-2008/032838
- JP-A- 2002 005 777
- US-A- 5 235 846
- US-B1- 6 492 043

## Beschreibung

Die Erfindung betrifft ein Verfahren zur Dichtheitsprüfung eines Stacks aus Brennstoffzellen, wobei der Stack aufweist:
- zahlreiche Brennstoffzellen, die jeweils eine erste Kammer, eine zweite Kammer und eine die Kammern trennende Membran aufweisen,
- einen Brennstoffzufuhrkanal und einen Brennstoffabfuhrkanal, die mit den ersten Kammern der Brennstoffzellen verbunden sind, und
- einen Zuluftkanal und einen Abluftkanal, die mit den zweiten Kammern der Brennstoffzellen verbunden sind.

Es ist bekannt, die Gasdichtheit von Hohlkörpern zu prüfen, indem ein Spurengas in den Hohlkörper eingeführt wird. Ein Trägergas wird an der Außenseite des Hohlkörpers entlanggeführt und einem Gasdetektor zugeführt. Wenn in dem Trägergas Anteile von Spurengas auftreten, wird auf ein Leck im Hohlkörper geschlossen. Entsprechende Leckprüfsysteme sind beschrieben in WO 2005/054806 A1. Es besteht auch die Möglichkeit, eine Spurengasatmosphäre außerhalb des Hohlkörpers zu schaffen und ein Trägergas durch den Hohlkörper hindurchzuleiten. Hierbei wird festgestellt, ob ein Durchgang des Spurengases von außen nach innen, bezogen auf den Hohlkörper, stattgefunden hat. Gassensoren, die in Verbindung mit einem Lecksuchgerät benutzt werden können, sind beschrieben in DE 4140366 A1 (Leybold) und DE 10319633 A1 (Inficon). Diese Gassensoren sind im Stande, selektiv das Vorhandensein eines bestimmten Spurengases in einer Gasströmung festzustellen. Als Spurengas wird häufig Helium benutzt, jedoch können auch andere Spurengase verwendet werden, wie beispielsweise Wasserstoff. Der Gassensor kann ein Massenspektrometer sein oder ein gasselektiv ansprechender Partialdrucksensor.

Auch US6492043, US5235846 und JP2002005777 offenbaren Verfahren zur Dichtigkeitsprüfung von Stacks aus Brennstoffzellen.

Der Erfindung liegt die Aufgabe zugrunde, ein Verfahren zur Dichtheitsprüfung eines Stacks aus Brennstoffzellen anzugeben, das eine effektive und schnelle Leckprüfung ermöglicht.

Das erfindungsgemäße Verfahren ist durch den Patentanspruch 1 definiert.

Mit dem erfindungsgemäßen Verfahren ist es möglich, Stacks aus Brennstoffzellen im zusammengebauten Zustand auf Dichtheit zu überprüfen. Dabei wird der Umstand ausgenutzt, dass die Brennstoffkammern (oder die Luftkammern) des gesamten Plattenstapels mit derselben Quelle für Spurengas verbunden werden können, um die Dichtigkeiten sämtlicher Kammern des Plattenstapels zu prüfen. Beispielsweise wird die brennstoffführende Seite mit dem Spurengas beaufschlagt. Ein Teil des Spurengases gelangt durch Permeation in die später luftführende Seite. Ist in der später luftführenden Seite ein größerer Anteil als der durch die Permeation verursachte Anteil zu detektieren, kann auf ein Leck in der Membran geschlossen werden.

Die Erfindung ermöglicht das schnelle, kostengünstige und effektive Prüfen des gesamten Brennstoffzellen-Stacks in einem einzigen Arbeitsschritt.

Gemäß einer bevorzugten Ausgestaltung der Erfindung ist vorgesehen, dass die jeweils anderen Kammern von einem Trägergas durchströmt werden und dass der diese Kammern verlassende Trägergasstrom dem Gassensor zugeführt wird. Der Trägergasstrom nimmt das Spurengas, welches ein Leck passiert hat, auf und transportiert es zu dem Gassensor, der gasselektiv auf das Spurengas anspricht.

Das erfindungsgemäße Verfahren ermöglicht nicht nur eine bloße Detektion des Vorhandensein eines Lecks sondern auch dessen Lokalisierung innerhalb des Plattenstapels. Hierzu weist der Gassensor eine mit einer Schnüffelsonde versehene Lanze auf, die in den betreffenden Kanal eingeführt und darin in Längsrichtung des Kanals bewegt wird. Bei Ansprechen des Gassensors wird die Position der Schnüffelsonde in dem Kanal ermittelt, um dadurch ein aufgetretenes Leck zu lokalisieren. Das Ansprechen des Gassensors wird festgestellt, wenn ein schlagartiger Anstieg der Spurengaskonzentration beim Bewegen der Sonde auftritt.

Im Folgenden wird unter Bezugnahme auf die Zeichnungen ein Ausführungsbeispiel der Erfindung näher erläutert.

Es zeigen:
- Fig. 1: eine schematische Darstellung eines Brennstoffzellen-Stacks während der Dichtheitsprüfung,
- Fig. 2: ein Explosionsbild einer in dem Stack enthaltenen Brennstoffzelle mit einer ersten Kammer durch die Brennstoff hindurchgeleitet wird und einer zweiten Kammer durch die Luft hindurchgeleitet wird und
- Fig. 3: den Brennstoffzellen-Stack während der Lokalisierung eines Lecks mit einer Schnüffelsonde, die an einer Lanze befestigt ist.

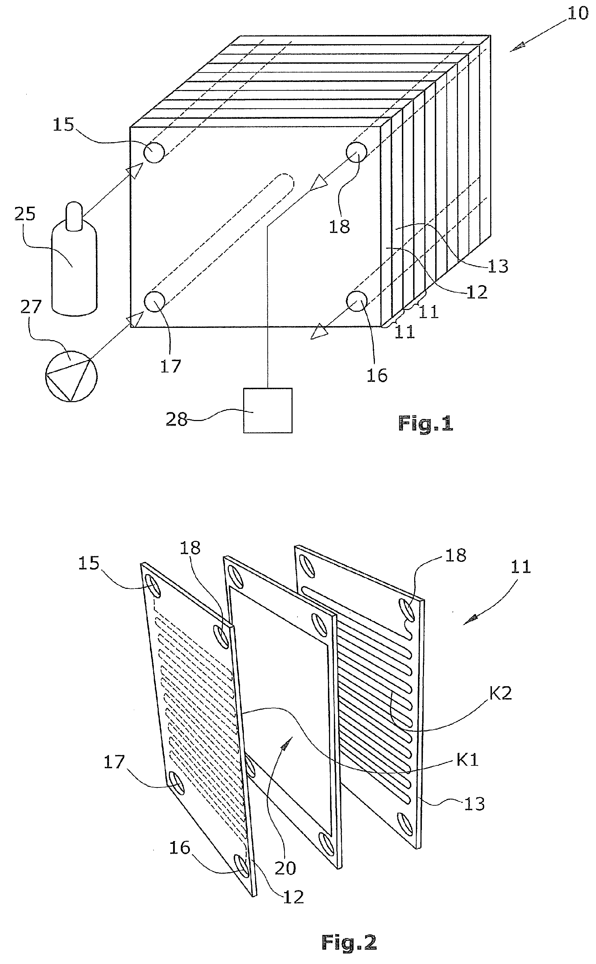

In Figur 1 ist ein Stack 10 aus Brennstoffzellen 11 dargestellt. Jede Brennstoffzelle besteht aus zwei deckungsgleichen Platten 12 zwischen denen eine Membran enthalten ist, die in Figur 1 nicht dargestellt ist. Die Brennstoffzellen 11 von rechteckiger Gestalt, sind zu dem Stapel zusammengesetzt. Der Stapel weist insgesamt vier Kanäle auf. Ein Brennstoffzufuhrkanal 15 erstreckt sich nahe der linken oberen Ecke der vorderen Platte durch den Stapel hindurch, wobei er innerhalb jeder Brennstoffzelle 11 mit der jeweiligen ersten Kammer verbunden ist. Ein Brennstoffabfuhrkanal 16 verläuft nahe der rechten unteren Ecke der vorderen Platte und erstreckt sich ebenfalls über die gesamte Länge des Stapels. Der Brennstoffabfuhrkanal 16 ist mit den zweiten Kammern sämtlicher Brennstoffzellen 11 verbunden. Bezogen auf eine Platte sind der Brennstoffzufuhrkanal und der Brennstoffabfuhrkanal diagonal zueinander angeordnet.

Die beiden anderen ebenfalls diagonal zueinander angeordneten Kanäle sind ein Zuluftkanal 17 und ein Abluftkanal 18. Diese sind mit den zweiten Kammern der Brennstoffzellen verbunden und erstrecken sich ebenfalls geradlinig über die gesamte Stapellänge.

Figur 2 zeigt den Aufbau einer Brennstoffzelle 11 mit den beiden Platten 12, 13. Zwischen den beiden Platten 12, 13 befindet sich eine Membran, die von einem plattenförmigen Rahmen gehalten sein kann. Die Platten 12, 12 haben jeweils an ihrer Innenseite, die der Membran 20 zugewandt ist, eine mäanderförmige Kammer K1 bzw. K2. Die Kammern sind Nuten in der Plattenfläche, wobei die Kammer K1 die Brennstoffkammer und die Kammer K2 die Luftkammer bildet. Die erste Kammer K1 ist mit dem Brennstoffzufuhrkanal 15 und dem Brennstoffabfuhrkanal 16 verbunden. Die zweite Kammer K2 ist mit dem Zuluftkanal 17 und dem Abluftkanal 18 verbunden. Die Ränder der Platten liegen abdichtend aufeinander, so dass die Kammern K1, K2 nach außen hin abgedichtet sind. Die Kanäle 15, 16 sind an der Rückseite des Stacks mit der ersten Kammer K1 der letzten Brennstoffzelle 11 verbunden, aber nicht nach außen geführt. In gleicher Weise sind auch der Zuluftkanal 17 und der Abluftkanal 18 auf der Rückseite des Stacks 10 verschlossen.

Beim Betrieb der Brennstoffstelle wird dem Brennstoffzufuhrkanal 15 gasförmiger oder flüssiger Brennstoff zugeführt, beispielsweise Wasserstoff oder Methanol. Der Zuluftkanal 17 wird an eine Luftquelle angeschlossen, beispielsweise ein Gebläse. An den Platten 12, 13 bilden sich unterschiedliche elektrische Potenziale aus, wodurch eine Spannung als Nutzspannung abgenommen werden kann. Durch den Brennstoffabfuhrkanal 16 entweicht unbenutzter Brennstoff. Der Zuluftkanal 17 wird an eine Luftquelle angeschlossen. Durch den Abluftkanal 18 entweichen aufgeheizte Luft und Wasser. Die Brennstoffzelle enthält außerdem eine Anodenschicht und eine Katodenschicht und einen Katalysator. Sie spaltet Wasserstoff in positive Wasserstoffionen (Protonen) und negativ geladene Elektronen auf. Die Polymer-Elektrolytmembran (PEM) erlaubt den Durchtritt lediglich der positiv geladenen Ionen zur Katode. Die negativ geladenen Elektronen müssen durch eine externe Schaltung zur Katode fließen, wodurch ein elektrischer Strom entsteht. An der Katode vereinigen sich die positiv geladenen Wasserstoffionen mit dem Sauerstoff, wodurch Wasser entsteht, das aus der Zelle abgeführt wird.

Figur 1 zeigt das Verfahren zur Dichtheitsprüfung des Stacks 10. An den Brennstoffzufuhrkanal 15 ist eine Quelle 25 für Spurengas angeschlossen. Das Spurengas durchströmt die ersten Kammern K1 und verlässt diese durch den Brennstoffabfuhrkanal 16. Dort kann das Spurengas aufgefangen oder in die Atmosphäre abgelassen werden. Als Spurengas wird Wasserstoff, Helium, Kohlendioxid oder ein anderes, gut zu detektierendes Gas, benutzt. Dieses wird mit leichtem Überdruck gegenüber dem Atmosphärendruck in den Stack 10 eingeleitet.

Der Zuluftkanal 17 wird an eine Luftquelle 27 angeschlossen, die ein Trägergas, hier: Luft, in den Zuluftkanal treibt. Das Trägergas durchströmt die zweiten Kammern K2 sämtlicher Zellen und verlässt den Stapel durch den Abluftkanal 18. Der Abluftkanal 18 ist an einen Gassensor 28 angeschlossen, bei dem es sich um ein übliches Lecksuchgerät handeln kann.

Ist in keiner der Zellen ein Leck vorhanden, so wird ein Teil des Spurengases durch Permeation in die jeweils andere Kammer eindringen und durch den Abluftkanal 18 abgeführt. Der Gassensor 28 liefert ein quantitatives Signal, das auch Auskunft über die Menge des detektierten Spurengases gibt. Wird ein größerer Anteil als die durch Permeation verursachte Menge an Spurengas detektiert, kann auf ein Leck in einer Membran einer Kammer geschlossen werden.

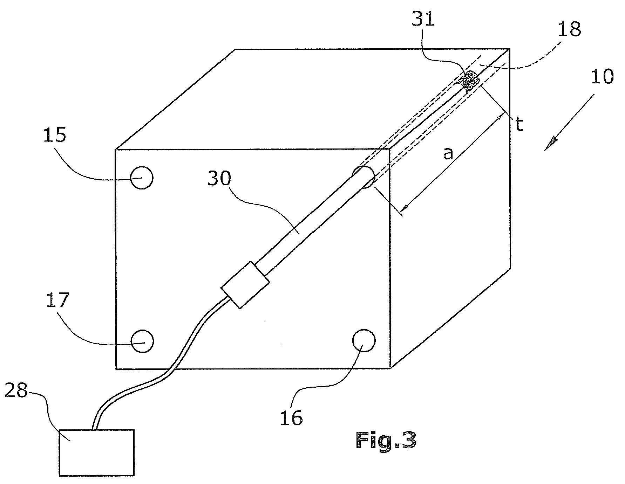

Figur 3 zeigt die Lokalisierung eines Lecks innerhalb des Stacks 10 während der Leckdetektion. Hierbei ist der Brennstoffzufuhrkanal 15, wie in Figur 1, an eine Quelle für Spurengas angeschlossen und der Zuluftkanal 17 ist an eine Druckluftquelle angeschlossen. In den Abluftkanal 18 ist eine Lanze 30 gesteckt, die am vorderen Ende eine Schnüffelsonde 31 trägt. Die Lanze 30 ist hohl und durch sie wird von dem Gassensor 28, bei dem es sich um ein Lecksuchgerät handelt, Gas eingesaugt und auf das Vorhandensein von Spurengas analysiert. Die jeweilige Position der Schnüffelsonde 31 in Längsrichtung des Kanals 18 wird detektiert. Diejenige Position, bei der ein schlagartiger Anstieg der Spurengaskonzentration erkannt wird, kennzeichnet die Lage der undichten Zelle 11. Zur Bestimmung der Position der Schnüffelsonde 31 innerhalb des Stacks 10, kann an der Lanze 30 ein Längenmaßstab vorgesehen sein, so dass an dem Austrittsende des Abluftkanals 18 ein Längenmaß abgelesen werden kann, das der Länge a entspricht, die sich noch in dem Stack 10 befindet.

Während der Lecksuche kann der Kanal 16 offen sein, so dass das Spurengas entweicht. Der Kanal 16 kann aber auch durch einen Stopfen oder ein anderes Element verschlossen sein, so dass sich ein Druck des Spurengases im Stack 10 ausbildet.

Bei dem vorliegenden Ausführungsbeispiel wurde angegeben, dass die ersten Kammern K1 von dem Spurengas durchströmt werden und die zweiten Kammern K1 von dem Trägergas durchströmt werden, bei dem es sich hier um Luft handelt. Diese Verhältnisse können auch umgekehrt werden, so dass die ersten Kammern von dem Trägergas und die zweiten Kammern von dem Spurengas durchströmt werden.

## Patentansprüche

1. Verfahren zur Dichtheitsprüfung eines Stacks (10) aus Brennstoffzellen (11), wobei der Stack aufweist:
- zahlreiche Brennstoffzellen (11), die jeweils eine erste Kammer (K1), eine zweite Kammer (K2) und eine die Kammern trennende Membran (20) aufweisen,
- einen Brennstoffzufuhrkanal (15) und einen Brennstoffabfuhrkanal (16), die mit den ersten Kammern (K1) der Brennstoffzellen verbunden sind, und
- einen Zuluftkanal (17) und einen Abluftkanal (18), die mit den zweiten Kammern der Brennstoffzellen verbunden sind,
wobei die ersten Kammern (K1) oder die zweiten Kammern (K2) mit einer Quelle (25) für Spurengas verbunden werden, und dass mindestens einer der Kanäle der jeweils anderen Kammern mit einem auf das Spurengas ansprechenden Gassensor (28) verbunden wird,
**dadurch gekennzeichnet,**
**dass** der Gassensor (28) eine mit einer Schnüffelsonde (31) versehene Lanze (30) aufweist, die in den betreffenden Abluftkanal (18) eingeführt und darin in Längsrichtung des Kanals bewegt wird, und dass bei Ansprechen des Gassensors (28) die Position der Schnüffelsonde (31) in dem Kanal ermittelt wird, um dadurch ein Leck zu lokalisieren.

2. Verfahren nach Anspruch 1, **dadurch gekennzeichnet, dass** jede Brennstoffzelle (11) eine plattenförmige Struktur hat, wobei der Stack (10) eine durch die Anzahl der plattenförmigen Brennstoffzellen bestimmte Stacklänge aufweist und dass der Brennstoffzufuhrkanal (15), der Brennstoffabfuhrkanal (16), der Zuluftkanal (17) und der Abluftkanal (18) sich jeweils geradlinig über die gesamte Stacklänge erstrecken.

3. Verfahren nach Anspruch 1 oder 2, **dadurch gekennzeichnet, dass** die jeweils anderen Kammern von einem Trägergas durchströmt werden und dass der diese Kammern verlassende Trägergasstrom dem Gassensor (28) zugeführt wird.

4. Verfahren nach Anspruch 1, **dadurch gekennzeichnet, dass** ein Ansprechen des Gassensors (28) festgestellt wird, wenn ein schlagartiger Anstieg der Spurengaskonzentration beim Bewegen der Sonde (31) auftritt.

## Claims

1. A method for checking the tightness of a stack (10) of fuel cells (11), said stack comprising:
- a plurality of fuel cells (11), each having a first chamber (K1), a second chamber (K2) and a membrane (20) separating the chambers,
- a fuel feed channel (15) and a fuel discharge channel (16) connected to the first chambers (K1) of the fuel cells, and
- a feed air channel (17) and an exhaust air channel (18) connected to the second chambers of the fuel cells,
wherein the first chambers (K1) or the second chambers (K2) are connected to a tracer gas source (25), and at least one of the channels of the respective other chambers is connected to a gas sensor (28) responsive to the tracer gas,
**characterized in that**
the gas sensor (28) comprises a lance (30) provided with a sniffer probe (31), which lance is inserted into a respective exhaust air channel (18) and is moved therein in the longitudinal direction of the channel, and that upon a response of the gas sensor (28), the position of the sniffer probe (31) in the channel is determined so as to thereby localize a leak.

2. The method of claim 1, **characterized in that** each fuel cell (11) has a plate-shaped structure, the stack (10) having a stack length determined by the number of the plate-shaped fuel cells, and that the fuel feed channel (15), the fuel discharge channel (16), the feed air channel (17) and the exhaust air channel (18) each extend linearly along the entire length of the stack.

3. The method of claim 1 or 2, **characterized in that** the respective other chambers are flown through by a carrier gas, and that the carrier gas flow exiting from these chambers is supplied to the gas sensor (28).

4. The method of claim 1, **characterized in that** a response of the gas sensor (28) is determined when an abrupt increase in the tracer gas concentration occurs while the probe (31) is moved.

## Revendications

1. Procédé de contrôle de l'étanchéité d'une pile (10) de cellules à combustible (11), la pile comprenant
- de nombreuses cellules à combustible (11) dont chacune comporte une première chambre (K1), une seconde chambre (K2) et une membrane (20) séparant les chambres l'une de l'autre,
- un canal d'amenée de combustible (15) et un canal d'évacuation de combustible (16) qui sont reliés aux premières chambres (K1) des cellules à combustible, et
- un canal d'amenée d'air (17) et un canal d'évacuation d'air (18) qui sont reliés aux secondes chambres,
les premières chambres (K1) ou les secondes chambres (K2) étant reliées à une source (25) de gaz traceur et au moins un des canaux des respectivement autres chambres étant relié à un capteur de gaz (28) réagissant au gaz traceur,
**caractérisé en ce que** le capteur de gaz (28) comprend une lance (30) pourvue d'une sonde de reniflage (31) qui est introduite dans le canal d'évacuation d'air (18) respectif et
qui, ensuite, est déplacée en direction longitudinale du canal, et **en ce que**, lorsque le capteur de gaz (28) réagit, la position de la sonde de reniflage (31) dans le canal est déterminée pour localiser une fuite.

2. Procédé selon la revendication 1, **caractérisé en ce que** chaque cellule à combustible (11) présente une structure en forme de plaque, la pile (10) ayant une longueur déterminée par le nombre de cellules à combustible en forme de plaques, et **en ce que** le canal d'amenée de combustible (15), le canal d'évacuation de combustible (16), le canal d'amenée d'air (17) et le canal d'évacuation d'air (18) s'étendent sur la longueur entière de la pile.

3. Procédé selon la revendication 1 ou 2, **caractérisé en ce que** les respectivement autres chambres sont traversées par un gaz porteur et **en ce que** le flux de gaz porteur quittant ces chambres, est acheminé au capteur de gaz (28).

4. Procédé selon la revendication 1, **caractérisé en ce qu'**une réaction du capteur de gaz (28) est constatée, lorsqu'il y a une augmentation subite de la concentration de gaz traceur lors d'un déplacement de la sonde (31).
